# EUROPEAN PATENT APPLICATION

(11) **EP 2 357 425 A2**
(43) Date of publication of application: **17.08.2011**
(21) Application number: 11151715.7
(22) Date of filing: 21.01.2011
(51) Int. Cl.: F24J 2/07, F24J 2/46, F24J 2/48

(54) **High efficiency solar thermal receiver**

(30) Priority: 01.02.2010 US 697923
(71) Applicant: General Electric Company, Schenectady, NY 12345 (US)
(72) Inventor: Meyers, Mark Marshall, Niskayuna, NY 12309 (US); Corderman, Reed Roeder, Niskayuna, NY 12309 (US); Sakami, Mohamed, Niskayuna, NY 12309 (US); Tsakalakos, Loucas, Niskayuna, NY 12309 (US); Lang, Kevin Richard, Denver, CO 80202 (US)
(74) Representative: Bedford, Grant Richard

(57) **Abstract**

In accordance with the present disclosure, a receiver panel (30) is provided that includes multiple thermally conductive nanostructures (34). The thermally conductive nanostructures (34) may be provided on a substrate (32) that supports the multiple thermally conductive nanostructures (34). In one embodiment, the thermally conductive nanostructures (34) may be substantially orthogonal with respect to the surface of the substrate (32).

## Description

The subject matter disclosed herein relates generally to solar thermal energy, and more particularly to a receiver for harnessing solar thermal energy.

Solar thermal power systems use reflected sunlight as a heat source to drive electric generation. One way to convert solar energy into a usable form of energy is through concentrating solar power systems. Concentrating solar power systems generally rely upon reflective surfaces to reflect the sun's rays to a common, focal, heat absorbing zone, i.e. a central receiver. The central receiver is a target for the reflected sun's rays, which are highly concentrated at the central receiver and may be collected at high temperatures in excess of 500 degrees Centigrade. The heat generated at the central receiver may subsequently be used with existing power or heat generation systems, such as steam-turbine driven electrical generating plants, to produce electricity or otherwise to provide thermal energy for other systems.

To generate heat on the surface of the solar thermal receiver it is desirable to absorb as much of the solar spectrum incident at the surface of the earth as possible. However, significant losses of heat occur due to convection because of the exposure of the high temperature receiver surface to the ambient air. Additionally, heat losses occur due to the re-radiation of electromagnetic energy into space. Minimizing these sources of heat loss would improve the efficiency of solar thermal receivers.

In a first embodiment of the present invention, a receiver panel is provided. The receiver panel includes multiple thermally conductive nanostructures and a substrate wherein the substrate supports the multiple thermally conductive nanostructures.

In a second embodiment, a solar power plant is provided. The solar power plant includes a tower and a receiver secured to the tower. The receiver includes at least one receiver panel that includes multiple heat absorbent nanostructures and a heat absorbent metal substrate. The metal substrate supports the multiple heat absorbent nanostructures. The solar power plant also includes one or more reflective structures configured to reflect incident energy on the receiver.

In a third embodiment, a receiver panel is provided. The receiver panel includes multiple metallic nanowires and a metal substrate. The multiple metallic nanowires are substantially orthogonal with respect to the metal substrate. The receiver panel also includes a semi-transparent or transparent dielectric medium forming an enclosure or coating to maintain a non-oxidative environment for the multiple metallic nanowires. The receiver panel further includes an anti-reflective coating configured to increase transmittance of wavelengths ranging from about 330 nm to about 2500 nm through the dielectric medium and a low emittance coating configured to reflect wavelengths of at least about 3000 nm back to the multiple metallic nanowires.

Various features, aspects, and advantages of the present invention will become better understood when the following detailed description is read with reference to the accompanying drawings in which like characters represent like parts throughout the drawings, wherein:
FIG. 1 is a schematic diagram of a solar power system in accordance with certain embodiments of the technique disclosed herein;
FIG. 2 is a schematic diagram of another solar power system in accordance with certain embodiments of the technique disclosed herein;
FIG. 3 is a diagrammatical side view of a portion of a receiver panel in accordance with certain embodiments of the technique disclosed herein;
FIG. 4 is a diagrammatical side view of a portion of a receiver panel with an index matching film in accordance with certain embodiments of the technique disclosed herein;
FIG. 5 is a diagrammatical side view of a portion of a receiver panel with a covering in accordance with certain embodiments of the technique disclosed herein;
FIG. 6 is a diagrammatical side view of a portion of a receiver panel with an enclosure in accordance with certain embodiments of the technique disclosed herein;
FIG. 7 is a diagrammatical side view of a portion of a receiver panel, as shown in FIG. 5, with a low emittance coating and an anti-reflective coating in accordance with certain embodiments of the technique disclosed herein; and
FIG. 8 is a diagrammatical side view of a portion of a receiver panel, as shown in FIG. 6, with a low emittance coating and an anti-reflective coating in accordance with certain embodiments of the technique disclosed herein.

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

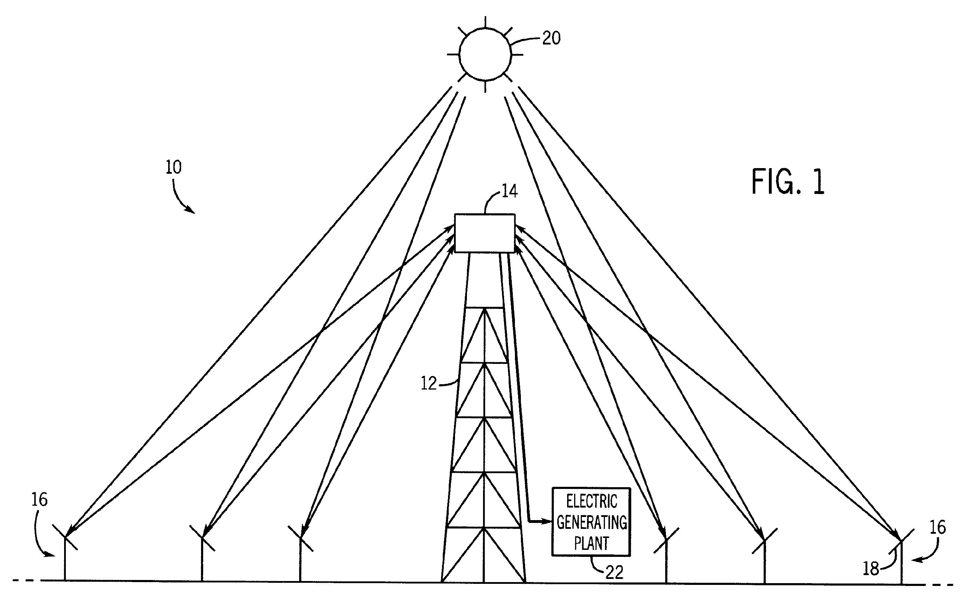

Turning now to the drawings and referring first to FIG. 1, a schematic diagram of an embodiment of a solar power system 10 is illustrated. The diagram depicts a tower 12, a central receiver 14 attached to the top of the tower 12, and a field of heliostats 16. The receiver 14 may include one or more receiver panels. The field of heliostats 16 includes one or more heliostats that include an optical reflective surface 18 that is appropriately mounted, driven and/or controlled so as to track the sun 20 during the course of the day and reflect the sun's rays to the central receiver 14. The central receiver 14 is heated to a high temperature (e.g., 500 degrees Centigrade or higher) whereupon the heat is generally extracted by flowing a heat transfer fluid through or proximate to the receiver 14. The heat transfer fluid may include synthetic oil, molten salt, organic fluid, water, or air. The receiver 14 may be a tubular receiver where pipes or tubes run directly through the panel of the receiver 14. Alternatively, the receiver 14 may be a planar or volumetric receiver where pipes or tubes extract the heat from the back of the panel of the receiver 14. The heat is then transferred from the receiver 14 to an electric generating plant 22, e.g. a steam-turbine driven electrical generating plant, to convert the thermal heat into electricity.

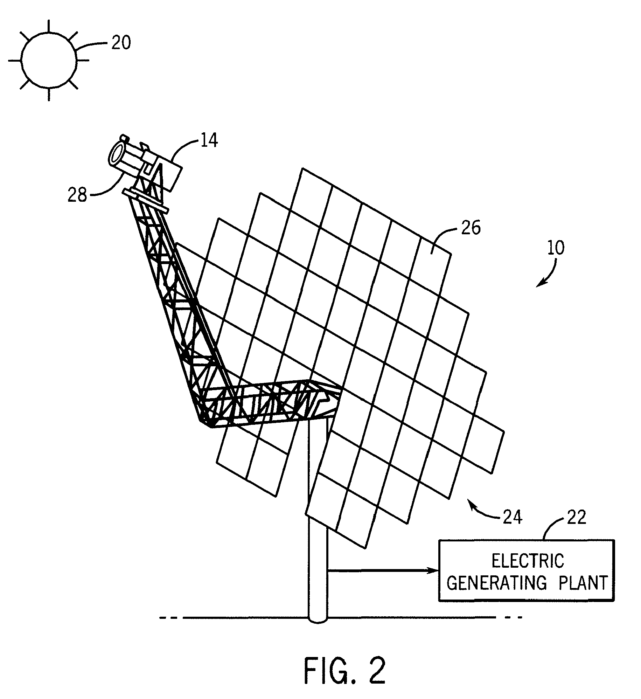

FIG. 2 illustrates a schematic diagram of a further embodiment of a solar power system 10. The solar power system 10 includes a solar dish/engine system 24 that includes a plurality of reflective solar collectors 26, a receiver 14, and an engine 28. The receiver 14 may be directly incorporated into the engine or constitute a separate unit. The plurality of solar collectors 26 track the sun 20 during the course of the day and reflect the sun's rays at the receiver 14 located at the focal point of the dish system 24. The heat collected by the receiver 14 may then be transferred to the engine 28. The engine 28 includes a working fluid. Cold working fluid within the engine 28 is compressed and heat is transferred to the engine 28 from the receiver 14 to heat the compressed working fluid, whereupon the working fluid is expanded through a turbine or with a piston to generate mechanical power. The mechanical power may then be transferred to an electric generating plant 22. Additional embodiments may incorporate the use of a receiver in smaller scale applications, e.g., rooftop heat collectors, solar water heaters, solar driven air conditioning systems, and so forth to capture solar thermal energy.

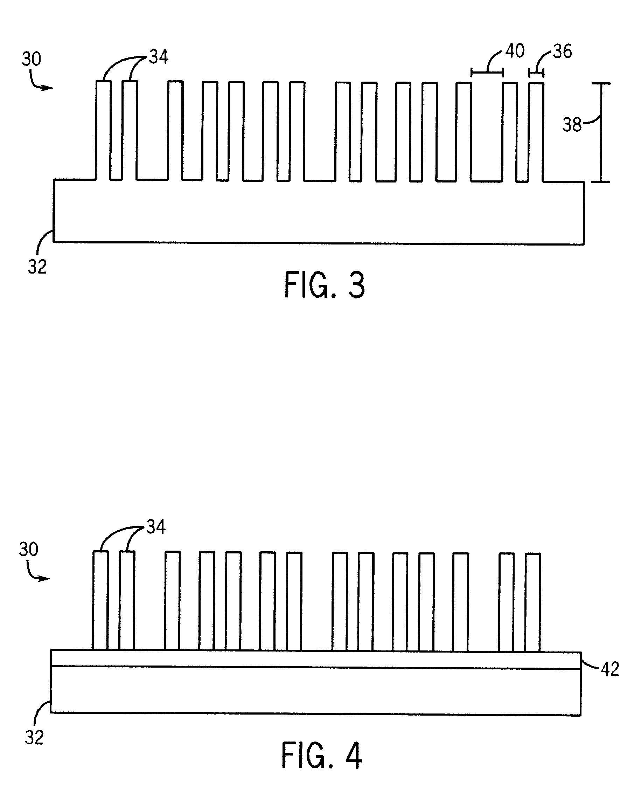

FIG. 3 illustrates a diagrammatical side view of an embodiment of a receiver panel 30 for use in a receiver 14 (FIGS. 1 and 2). Embodiments of the receiver panels 30 may be arranged to make a flat surface. Alternatively, the receiver panels 30 may be arranged in a cylindrical fashion. The receiver panel 30 includes a substrate 32 supporting a plurality of thermally conductive or heat absorbent nanostructures 34 configured to transfer heat to the substrate 32. The substrate 32 may consist of a metal or other suitable thermally conductive or heat absorbent material. Examples of metals that the substrate 32 may consist of are INCONEL®, nickel, aluminum overcoated with aluminum oxide, or titanium overcoated with titanium oxide. In one embodiment, the substrate 32 may range from about 2 mm to about 3 mm thick.

Embodiments of the receiver panels 30 may include heat extraction piping attached to the back surface of the receiver panel 30. Heat may be transferred from the substrate 32 to the piping. Alternatively, the receiver panels 30 may include thin walled pipes within the receiver panels 30. These pipes may be coated with a plurality of thermally conductive nanostructures 34 to maximize the transfer of heat. Thus, the heat may be transferred from the nanostructures 34 thru the thin walls of the piping to the heat transfer fluid flowing through the pipes. In one embodiment, the walls of the piping may range from about 2 mm to about 25 mm thick.

As for the nanostructures 34, using a nanopatterned surface on the substrate 32 reduces the scattering and diffraction of light, and thus loss of solar thermal energy. In one embodiment, the thermally conductive nanostructures 34 are substantially vertically aligned with respect to the substrate 32 (i.e., orthogonal). In alternative embodiments, the plurality of thermally conductive nanostructures 34 may vary in their alignment with respect to the substrate 32. The thermally conductive nanostructures 34 may vary in cross-section and may, for example, have a tubular, circular, square, rectangular, triangular, or any other suitable polygonal cross-section. The thicknesses or diameters 36 of the thermally conductive nanostructures 34 may range from about 5 nm to about 1000 nm in one embodiment. The height 38 of the thermally conductive nanostructures 34 may range from about 0.1 µm to about 10 µm in one such embodiment. The separation distance 40 between each of the plurality of nanostructures 34 may range from about 50 nm to about 3 µm in certain embodiments. The size, shape, and distribution of the thermally conductive nanostructures 34 may be determined and/or configured to allow the receiver panel 30 to more efficiently absorb a particular spectral region of interest.

In one embodiment, the plurality of thermally conductive nanostructures 34 may consist of heat absorbent or thermally conductive metal to more effectively absorb light and heat. Light incident on the plurality of thermally conductive nanostructures 34 may be absorbed or reflected within the plurality of nanostructures 34. When the incident light is partially reflected within the plurality of nanostructures 34, the light will be further absorbed and partially reflected until substantially all of the energy is absorbed. For example, nanostructures with a tubular shape may consist of a high efficiency absorber, such as carbon. Nanostructures, with alternative shapes such as a wire shape (nanowires), may consist of nickel, silver, copper, cobalt, or other suitable metals, and/or the respective oxides of these metals. These metals are highly absorbing over the ultraviolet, visible, and near infrared spectral range. In addition, in another embodiment, nanostructures may consist of semiconductor materials such as indium antimonide or indium arsenide. Besides highly absorbent nanostructures, the plurality of thermally conductive nanostructures 34 may include metal oxides with a low emissivity over the spectral range of about 300 nm to about 3 µm, such as tin oxide, zinc oxide, or indium oxide. The composition of the thermally conductive nanostructures 34 may also be determined so as to allow the receiver panel 30 to more efficiently absorb a particular spectral region of interest.

The plurality of thermally conductive nanostructures 34 may be fabricated in a variety of ways. One embodiment of a receiver panel 30 consists of directly wet etching the plurality of nanostructures 34 out of the substrate 32 where the substrate 32 consists of a heat absorbent or thermally conductive metal such as INCONEL®. An alternative embodiment consists of depositing an aluminum film on the substrate 32 and producing a nanoporous anodized aluminum oxide template on the substrate 32 by acidic anodization. The plurality of thermally conductive nanostructures 34 may then be electroplated into the nanopores with a vertical alignment with respect to the substrate 32. Additional methods may be employed to fabricate the nanostructures 34 such as using a photomask patterned on a substrate followed by chemical vapor deposition, physical vapor deposition at glancing angles (sputtering and evaporation), direct chemical synthesis, plasma or liquid etching, or nucleation of nanostructures 34 onto the exposed areas of the substrate 32. Formation of metallic or dielectric nanomasks in combination with dry etching techniques such as reactive ion etching (RIE) or inductively coupled plasma (ICP) etching may also be used to fabricate the nanostructures 34.

FIG. 4 illustrates a diagrammatical side view of another embodiment of a receiver panel 30. The receiver panel 30 includes a substrate 32 supporting a plurality of thermally conductive or heat absorbent nanostructures 34 and an optical index matching film 42. In the depicted embodiment the index matching film 42 may be disposed between the plurality of nanostructures 34 and the substrate 32. As in the embodiments above, the substrate 32 may consist of a thermally conductive or heat absorbent metal. The index matching film 42 may consist of a single layer or multiple layers. In addition, the index matching film 42 may also be graded. The index matching film 42 may enhance the optical matching between the metal of the substrate 32 and the plurality of nanostructures 34. In addition, the index matching film may promote adhesion between the plurality of nanostructures 34 and the substrate 32.

The atmosphere around the receiver panel 30 may be heated to temperatures of at least 500 degrees Centigrade. Exposure of the plurality of thermally conductive nanostructures to such temperatures while exposed to the atmosphere may result in the oxidation of the nanostructures 34 or may significantly degrade the absorptivity of the nanostructures 34. Additionally, the exposure of the high temperature atmosphere around the receiver panel 30 to ambient air temperatures of 25 to 50 degrees Centigrade may result in the transfer of heat to the ambient air via convection.

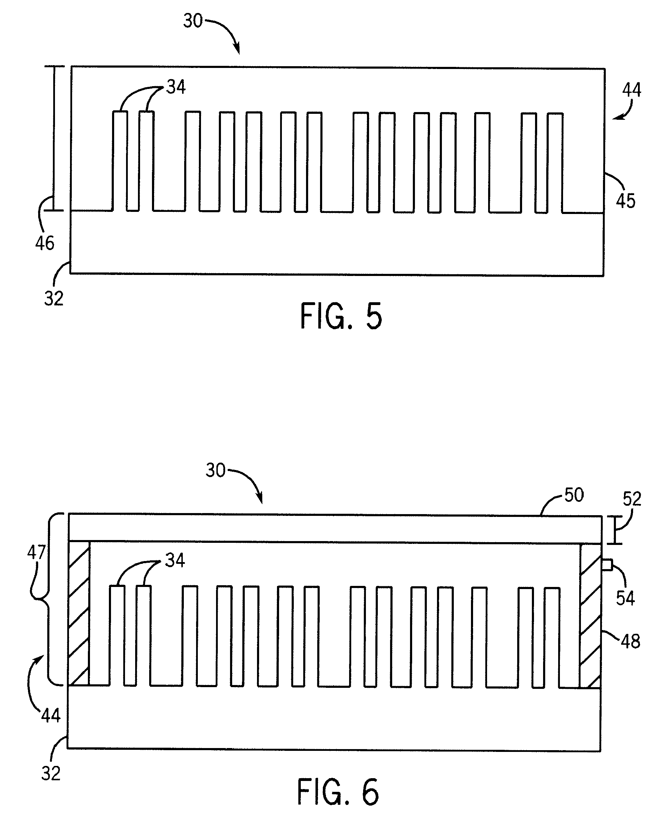

In view of these considerations, FIG. 5 illustrates a further embodiment of a receiver panel 30. The receiver panel 30 includes a substrate 32 supporting a plurality of thermally conductive or heat absorbent nanostructures 34, as discussed above, and a covering 44 encapsulating the plurality of nanostructures 34. In the depicted embodiment, the covering 44 is provided as an encapsulation layer 45 that coats the substrate 32 and nanostructures 34. The receiver panel 30 may include the covering 44 to reduce or eliminate oxidation of the nanostructures 34 and/or to reduce or eliminate convective heat transfer. In the depicted embodiment, the encapsulation layer 45 may be formed entirely or in part of a transparent or semi-transparent dielectric material such as silicon dioxide or quartz. The encapsulation layer 45 may be achieved via sputtering or vacuum deposition of the dielectric material directly onto the plurality of nanostructures 34. Alternatively, the dielectric material may be deposited via chemical vapor deposition or other suitable coating processes. The thickness 46 of the encapsulation layer 45 generally may range from about 3 µm to about 5 µm or greater and may, in one embodiment, extend to about 10 µm from the substrate surface. It is understood by those in the art that the encapsulation layer 45 may not be flat as depicted in FIG. 5 but may take on the shape and roughness of the underlying nanostructures 34, i.e. the encapsulation layer 45 may be deposited in a conformal manner about the nanostructures 34 beneath.

An alternative embodiment of the covering 44 is illustrated in FIG. 6. The receiver panel 30 also includes a substrate 32 supporting a plurality of thermally conductive or heat absorbent nanostructures 34 and a covering 44, in the form of enclosure 47, enclosing the plurality of nanostructures 34. The depicted enclosure 47 includes a metallic rim 48 brazed to the substrate 32 and a window 50 consisting of transparent or semi-transparent dielectric material such as silicon dioxide quartz or sapphire, soldered or brazed to the metallic rim 48. In one embodiment, the thickness 52 of the window 50 may range from about 2 mm to about 25 mm. The receiver panel 30 may include a port 54 to remove air from the enclosure 47 and then sealed to leave a vacuum within the enclosure 47. In addition, in another embodiment, the port 54 may be used to inject an inert gas such as argon or nitrogen into the enclosure 47.

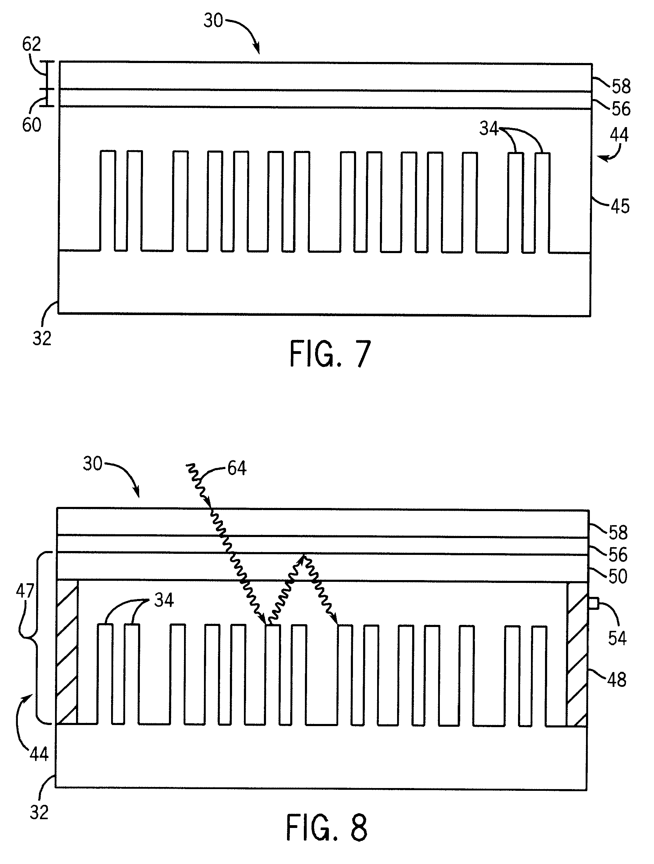

Besides convection, a significant amount of heat is also lost due to the re-radiation of electromagnetic energy into space. FIG. 7 illustrates an additional embodiment of a receiver panel 30. Similar to the embodiment in FIG. 5, the receiver panel 30 includes a substrate 32 supporting a plurality of thermally conductive or heat absorbent nanostructures 34 and an encapsulation layer 45 coating the plurality of nanostructures 34. The depicted receiver panel 30 also includes a low emittance coating 56 and an anti-reflective coating 58. In one embodiment, the low emittance coating 56 is configured to reflect wavelengths of about 2500 nm to about 14 µm (long wavelength IR) back to the plurality of thermally conductive nanostructures 34.

In one embodiment, the low emittance coating 56 also allows the transmittance of solar radiation having wavelengths ranging from about 350 nm to about 2500 nm to the plurality of nanostructures 34. In one implementation, the low emittance coating 56 may consist of multiple layers of tin oxide and silver and the thickness 60 of the low emittance coating 54 may be around 100 nm. Other multi-layered dielectric coating stacks can also be utilized to implement a long wavelength reflector which traps heat within the receiver. The low emittance coating 56 may be disposed above or beneath the anti-reflective coating 58 or may be disposed on or beneath the transparent or semitransparent covering 44.

The anti-reflective coating 58 is configured to withstand the high temperatures at the surface of the receiver panel 30. In addition, in one embodiment the anti-reflective coating is configured to maximize the transmittance of light within the wavelengths of about 330 nm to about 2500 nm to the plurality of thermally conductive nanostructures 34. The anti-reflective coating 58 may consist of a multi-layered dielectric material. In one embodiment, the thickness 62 of the anti-reflective coating 58 may range from about 0.1 µm to about 2 µm. The anti-reflective coating 58 may be disposed above or below the low emittance coating 56 or on or beneath the transparent or semitransparent covering 44. In one embodiment, a quartz window without the anti-reflective coating 58 and provided as part of a covering 44 transmits 93% of the incident radiation, but the same quartz window with the anti-reflective coating 58 may transmit 99% of the incident radiation.

In an alternative embodiment, transparent nanostructures (e.g., nanorods) may be fabricated on the surface of the encapsulant or covering 44 by a direct solution deposition process of wide bandgap nanowires (e.g., ZnO, SnO₂, etc.) after first vacuum or solution depositing a thin buffer layer. Alternatively, the transparent nanostructures may be formed on the covering 44 by first depositing a thin index matched dielectric layer and then dry etching nanostructures into the layer using an array of metallic nanomasks (e.g., nickel) formed by photolithography or random breakup of metallic thin films into nano-islands upon annealing (e.g., nanosphere lithography). These structures form an omnidirectional anti-reflective coating. These nanostructures break up the continuous smooth surface and cause scattering and forward propagation into the surface, leading to enhanced broadband transmission of light to the substrate below at normal incidence and up to high input angles.

As seen in FIG. 8, the combination of the anti-reflection coating 58 and the low emittance coating 56 maximizes the amount of solar thermal energy obtained and retained by the receiver panel 30. FIG. 8 illustrates an embodiment of a receiver panel 30 similar to FIG. 6 with both the low emittance coating 56 and the anti-reflective coating 58. The incident light 64 is transmitted through the anti-reflective coating 58, the low emittance coating 56, and the window 50, whereupon the plurality of thermally conductive nanostructures 34 absorb some of the solar thermal energy. Due to temperatures of at least 500 degrees Centigrade present at the receiver panel 30, black body radiation may be re-radiated back towards space. However, in the depicted embodiment the low emittance coating 56 reflects wavelengths of about 2500 nm to about 14 µm back to the plurality of nanostructures 34 to trap the heat.

Various technical effects of certain of the above embodiments include increasing the heat captured by a solar receiver. In addition, another possible technical effect is that thermal losses of heat due to convection and re-radiation are significantly reduced. This allows more electricity to be created by solar thermal generating equipment from the incident light on the surface of the earth. A further possible technical effect is the use of nano-scale structures to improve the capture and/or transmission of thermal energy.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A receiver panel, comprising:
   a plurality of vertically oriented nanostructures;
   a substrate, wherein the substrate supports the plurality of vertically oriented nanostructures; and
   an encapsulation layer disposed over the vertically oriented nanostructures such that the vertically oriented nanostructures are not exposed to an oxidative environment, wherein the encapsulation layer comprises SiO₂ vacuum deposited or sputtered onto the plurality of nanostructures and the substrate.
2. The receiver panel of clause 1, wherein the plurality of nanostructures comprise metallic nanowires.
3. The receiver panel of any preceding clause, wherein the plurality of nanostructures comprise carbon nanotubes.
4. The receiver panel of any preceding clause, wherein the cross-sections of each of the plurality of nanostructures range from about 5 nm to about 1000 nm.
5. The receiver panel of any preceding clause, wherein the plurality of nanostructures comprises nickel, silver, copper, cobalt, and/or oxides of these metals.
6. The receiver panel of any preceding clause, wherein the plurality of nanostructures are etched into the substrate.
7. The receiver panel of any preceding clause, wherein the plurality of nanostructures are plasma or liquid etched into the substrate using a photomask.
8. The receiver panel of any preceding clause, wherein the receiver panel further comprises an index matching film that enhances the optical matching between the plurality of nanostructures and the substrate.
9. The receiver panel of any preceding clause, wherein the receiver panel further comprises an anti-reflective coating configured to increase transmittance of wavelengths ranging from about 330 nm to about 2500 nm through the encapsulation layer.
10. The receiver panel of any preceding clause, wherein the receiver panel further comprises a low emittance coating configured to reflect wavelengths of at least about 2500 nm back to the plurality of nanostructures.
11. A solar power plant, comprising:
   a tower;
   a receiver secured to the tower, wherein the receiver comprises at least one receiver panel comprising:
      a plurality of thermally conductive nanostructures;
      a substrate, wherein the substrate supports the plurality of thermally conductive nanostructures;
      a dielectric covering that substantially prevents O₂ from contacting the plurality of thermally conductive nanostructures;
      a low emittance coating configured to reflect wavelengths of at least about 2500 nm back to the plurality of thermally conductive nanostructures; and
   one or more reflective structures configured to reflect incident energy on the receiver.
12. The solar power plant of any preceding clause, wherein the receiver panel further comprises an anti-reflective coating configured to increase transmittance of wavelengths ranging from about 330 nm to about 2500 nm.
13. The solar power plant of any preceding clause, wherein the covering coats the plurality of thermally conductive nanostructures.
14. The solar power plant of any preceding clause, wherein the covering comprises a sealed enclosure formed over the plurality of thermally conductive nanostructures and secured to the substrate.
15. A receiver panel, comprising:
   a substrate;
   a plurality of nanostructures formed on the substrate; and
   a semi-transparent or transparent dielectric medium forming at least a portion of a sealed enclosure over the plurality of nanostructures to maintain a non-oxidative environment for the plurality of nanostructures.
16. The receiver panel of any preceding clause, wherein the receiver panel further comprises an anti-reflective coating configured to increase transmittance of wavelengths ranging from about 330 nm to about 2500 nm through the sealed enclosure.
17. The receiver panel of any preceding clause, wherein the receiver panel further comprises a low emittance coating configured to reflect wavelengths of at least about 2500 nm back to the plurality of nanostructures.
18. The receiver panel of any preceding clause, wherein the dielectric medium comprises SiO₂ or sapphire.
19. The receiver panel of any preceding clause, wherein the plurality of nanostructures comprise metallic nanowires consisting of nickel, silver, copper, cobalt, and/or oxides of these metals.
20. The receiver panel of any preceding clause, wherein the plurality of nanostructures comprise carbon nanotubes.

## Claims

1. A receiver panel (30), comprising:
a plurality of vertically oriented nanostructures (34);
a substrate (32), wherein the substrate (32) supports the plurality of vertically oriented nanostructures (34); and
an encapsulation layer (45) disposed over the vertically oriented nanostructures (34) such that the vertically oriented nanostructures (34) are not exposed to an oxidative environment, wherein the encapsulation layer (45) comprises SiO₂ vacuum deposited or sputtered onto the plurality of nanostructures (34) and the substrate (32).

2. The receiver panel (30) of claim 1, wherein the plurality of nanostructures (34) are etched into the substrate (32).

3. The receiver panel (30) of any preceding claim, wherein the receiver panel (30) further comprises an index matching film (42) that enhances the optical matching between the plurality of nanostructures (34) and the substrate (32).

4. The receiver panel (30) of any preceding claim, wherein the receiver panel (30) further comprises an anti-reflective coating (58) configured to increase transmittance of wavelengths ranging from about 330 nm to about 2500 nm through the encapsulation layer (45).

5. The receiver panel (30) of any preceding claim, wherein the receiver panel (30) further comprises a low emittance coating (56) configured to reflect wavelengths of at least about 2500 nm back to the plurality of nanostructures (34).

6. A receiver panel (30), comprising:
a substrate (32);
a plurality of nanostructures (34) formed on the substrate (32); and
a semi-transparent or transparent dielectric medium forming at least a portion of a sealed enclosure over the plurality of nanostructures (34) to maintain a non-oxidative environment for the plurality of nanostructures (34).

7. The receiver panel (30) of claim 6, wherein the receiver panel (30) further comprises an anti-reflective coating (58) configured to increase transmittance of wavelengths ranging from about 330 nm to about 2500 nm through the sealed enclosure.

8. The receiver panel (30) of claim 6 or claim 7, wherein the receiver panel (30) further comprises a low emittance coating (56) configured to reflect wavelengths of at least about 2500 nm back to the plurality of nanostructures (34).

9. The receiver panel (30) of any of claims 6 to 8, wherein the dielectric medium comprises SiO₂ or sapphire.

10. The receiver panel (30) of any of claims 6 to 9, wherein the plurality of nanostructures (34) comprise carbon nanotubes.
